# EUROPEAN PATENT APPLICATION

(11) **EP 4 574 415 A1**
(43) Date of publication of application: **25.06.2025**
(21) Application number: 23219203.9
(22) Date of filing: 21.12.2023
(51) Int. Cl.: B30B 15/26, B30B 11/00, B30B 15/02, B30B 15/32, B25J 9/00, B22F 3/03, B22F 5/00, G05B 19/418, B28B 3/08, B25J 9/16, B25J 9/02

(54) **TRANSFER SYSTEM FOR A POWDER COMPACTION MACHINE**

(71) Applicant: AB Sandvik Coromant, 811 81 Sandviken (SE)
(72) Inventor: GRIP, Henrik, 811 81 Sandviken (SE); Blomström, Lars, 811 81 Sandviken (SE)
(74) Representative: Sandvik

(57) **Abstract**

The invention relates to a transfer system (1) for transferring pressed articles (9) from a press device (2) to a tray (3) in a powder compaction machine (10). The transfer system includes a first picking arm (61) and a second picking arm (62), wherein the picking arms are independently moveable via respective first and second drive units (51, 52), in at least two transverse directions that are parallel, or substantially parallel, to respective first and second axes (Z, X), and wherein each picking arm (61, 62) includes a picking head (63, 64) at a front end thereof configured to pick up and release a pressed article (9). The transfer system further includes a control unit (4) configured to control the first and second drive units (51, 52) to move the first and second picking arms (61, 62), respectively, between a position in which the picking head (63) is in a pick position (21) for picking up a pressed article (9) from the press device (2), and a position in which the picking head (63) is in a release position (31) for releasing the pressed article (9) onto a surface of the tray (3). The invention also relates to a powder compaction machine comprising such transfer system, and to a method and corresponding computer program for transferring pressed articles in a powder compaction machine.

## Description

### TECHNICAL FIELD

The invention relates to powder metallurgy, and in particular powder compaction machines and transfer systems for such machines used for transferring pressed articles.

### BACKGROUND ART

In a powder compaction machine, articles are pressed from a powder, for example a carbide powder, using a press device. The pressed articles may for example be cutting inserts for cutting tools. After pressing, a pressed article must be transferred from the press device. A pressed carbide cutting insert must be sintered and is therefore often transferred to a sintering tray or some other location waiting for sintering in a sintering oven. The not yet sintered cutting insert (also referred to as green body) is fragile and must be handled with caution. Powder compaction machines often include a transfer system including a robotic arm with a picking head that can pick up a pressed article and transfer it to the location at which the pressed article is to be released, for example on a sintering tray.

If producing cutting inserts at a high speed, the robotic arm of the transfer system may need to move quite fast for transferring the cutting inserts from the press device. This may result in various problems, such as increased amount of vibration and stress on the transfer system due to the rapid movements, accelerations, and decelerations of the robotic arm.

Hence, there is a need for improvement when it comes to transferring pressed articles in a powder compaction machine.

### SUMMARY

It is an object of the present invention to mitigate the shortcomings of the prior art as outlined above, and to provide an improved transfer system and method for transferring pressed articles in a powder compaction machine. An object of embodiments of the invention is to provide a transfer system that efficiently and smoothly can transfer pressed articles in a powder compaction machine without unnecessarily contributing to vibrations or other undesired machine conditions.

Thus, according to a first aspect, the invention relates to a transfer system for transferring pressed articles from a press device to a tray in a powder compaction machine. The transfer system comprises:
- a first picking arm that is moveable, via a first drive unit, in at least two transverse directions that are parallel, or substantially parallel, to respective first and second axes, and wherein the first picking arm includes a first picking head at a front end thereof configured to pick up and release a pressed article; and
- a control unit configured to control the first drive unit to move the first picking arm between a position in which the first picking head is in a pick position for picking up a pressed article from the press device, and a position in which the first picking head is in a release position for releasing the pressed article onto a surface of the tray.

The transfer system further comprises a second picking arm, independently movable in relation to the first picking arm, wherein the second picking arm is movable, via a second drive unit, in at least two transverse directions that are parallel, or substantially parallel, to the respective first and second axes, and wherein the second picking arm includes a second picking head at a front end thereof configured to pick up and release a pressed article. The control unit is configured to control the second drive unit to move the second picking arm between a position in which the second picking head is in a pick position for picking up a pressed article from the press device, and a position in which the second picking head is in a release position for releasing the pressed article onto a surface of the tray.

Hence, the control unit may be configured to control the first and second drive units such that the first and second picking arms alternately transfer pressed articles from the press device to the tray. Thereby, the transfer of pressed articles can be fast and efficient, even with a moderate speed of the picking arms that does not result in vibrations or adversely affect the robustness of the process.

The pressed articles may be cutting inserts for cutting tools, and may be made from a carbide powder, such as a powder based on tungsten carbide and a binder including for example cobalt.

The tray may refer to a plate, a container or any kind of carrier having a surface onto which the pressed articles can be released and placed. For example, the tray may be a sintering tray that is intended to be placed in a sintering oven for sintering of the pressed articles located on the tray. Preferably, the tray is adapted to carry multiple pressed articles.

The means of the picking head for picking up a pressed article may be realized in various ways. For example, the picking head may include a mechanical gripping arrangement for gripping the article, or it may include a suction device which the pressed article adheres to by control of the negative pressure in the suction device.

The two transverse directions in which each of the two picking arms are moveable are parallel, or substantially parallel, to respective first and second axes. "Substantially parallel" in this context should be understood as parallel to the extent possible in view of tolerances and random variations in the alignment of the picking arms. Hence, even if the intention is that the two picking arms move in respective directions that are completely parallel to two axes (for example two axes of a coordinate system for the powder press machine), such that the directions of movement of the first picking arm are parallel to the respective directions of movement of the second picking arm, small variations in the alignment of the picking arms may result in a slight deviation between the directions. For the purposes of the present application, if such deviations are small, the directions may still be considered as parallel, or at least substantially parallel.

Each of the first and the second drive units, to which the first and the second picking arms are arranged, may include linear motion drives including, for example, linear guides and guide carriages moveably arranged thereto and associated motors and drives, arranged such as to provide movements of the picking arms in the at least two transverse directions. The first and the second drive units may be embodied as standalone drive units, individually controlled by the control unit, or they may be considered as parts of a single drive unit.

The control unit may include means for controlling the drive units, i.e., by sending control signals for initiating movement of the picking arms via their respective drive units. Preferably, the control unit provides the possibility to control movement of the picking arms individually and separately.

The control unit is connected to the first and the second drive units for control thereof. The control unit may be a group of devices including separate control unit sections, such that functionality for performing operations may be spread out over different physical, or virtual, devices of the system. As an example, different control unit sections may be arranged as intrinsic parts of the respective drive units that they are configured to control.

The transfer system may include processing circuitry and a memory. Such processing circuitry and memory may be intrinsic parts of the control unit. Alternatively, or in combination, an external processing circuitry and memory may be in communicational contact with the control unit. The processing circuitry is configured to control the first and second drive units, and thus the movement of the picking arms, via the control unit. The processing circuitry and/or the memory may thus be parts of the control unit or located elsewhere in the powder compaction machine or at a remote location.

The processing circuitry may comprise one or more programmable processors, application-specific integrated circuits, field programmable gate arrays or combinations of these adapted to execute instructions. The memory may contain instructions executable by said processing circuitry, whereby the transfer system is operative for transferring pressed articles from the press device to the tray in the powder compaction machine.

The instructions executable by the processing circuitry may be arranged as a computer program stored e.g. in the memory. The computer program may comprise computer readable code means, which when executed by the processing circuitry causes the transfer system to perform operations for transferring pressed articles from the press device to the tray in the powder compaction machine.

The computer program may be carried by a computer readable storage medium connectable to the processing circuitry. The computer program product may be the memory. The memory may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory. Alternatively, the computer program may be stored on a server or any other entity connected to which the transfer system has access. The computer program may then be downloaded from the server into the memory.

The first and the second axes are transverse, i.e., non-parallel, and may be orthogonal to each other, meaning that the first and second picking arms are movable along two directions that are perpendicular, or substantially perpendicular, to each other. Such orthogonal first and second axes may, together with a third orthogonal axis, define a cartesian coordinate system of the powder compaction machine.

According to some embodiments, during operation of the transfer system, the first and second picking arms are moveable only in the respective two transverse directions that are parallel, or substantially parallel, to the first and second axes. Thereby, the respective drive units do not need to be arranged for providing motion of the picking arms in more than two directions.

However, when first configuring the transfer system for operation in a powder compaction machine or when calibrating the system between operations to ensure a correct alignment of the picking arms, the transfer system may be arranged such that it is possible to adjust the positions of the picking arms in a third direction, for example a direction parallel to a third axis that is orthogonal to the first and second axis.

The first axis may be perpendicular to the surface of the tray. The first axis may also be defined as the axis along which a punch of the press device moves when an article is pressed. For most powder compaction machines, the direction along which the punch moves would normally be perpendicular to the surface of the tray, and this would also usually correspond to a vertical direction.

The respective directions parallel to the first axis along which the first and second picking arms are movable would then correspond to directions along which the picking arms move to pick up and/or release a pressed article.

The second axis may extend through, on one hand, a first line that is parallel to the first axis and that passes through the pick position, and, on the other hand, a second line that is parallel to the first axis and that passes through the release position.

The respective directions parallel to the second axis along which the first and second picking arms are movable would then correspond to directions along which the picking arms move in order to transfer a picked-up article from the press device to the tray for release thereupon.

According to some embodiments, the pick position for the first picking head is the same as the pick position for the second picking head. In other words, each article to be picked up by one of the first or second picking arms will be situated at the same position in the press device, irrespective of which of the first and second picking arms that will pick up the pressed article.

The release position for the first picking head may also be the same as the release position for the second picking head, which may be suitable if the tray is movable and is displaced between each release of a pressed article on the surface thereof (such that two pressed articles are not placed on top of each other). However, it is also possible that the respective release positions are different for each release of a pressed article, such that pressed articles are placed at different positions on the tray without having to move the tray between each release. It is also possible to combine different release positions with movements of the tray. For example, according to some embodiments, the release position for each of the first and second picking heads are located along a release line extending across the tray, such that pressed articles can be placed in a row, one after the other, on the tray. When one such row across the tray has been filled by pressed articles, the tray is moved a predefined distance in a direction perpendicular to the release line such that a new row of pressed articles can be placed on the tray.

The release line may coincide with a projection of the second axis on the surface of the tray.

According to some embodiments, each of the first and the second picking arms at least partly extends along a direction that is transverse to a plane containing the first and the second axes. The direction that is transverse to the plane containing the first and the second axes may extend perpendicularly to the first axis and the second axis, i.e., extending in a direction parallel to a third axis that is orthogonal to the first axis and the second axis, or it may extend at an angle other than 90 degrees with respect to the plane containing the first and the second axes.

Thereby, the picking head of each of the first and second picking arms can be located in a plane containing the first and the second axes even if other parts of the picking arm, and the related drive unit for moving the picking arm, are located at a distance from such plane.

According to some embodiments, the first and the second picking arms are arranged such that, during movement of the respective picking arms, the first picking head and the second picking head are always located in a plane containing the first and the second axes.

Thereby, an arrangement is achieved wherein the respective picking heads of two different picking arms move in the same plane, providing efficient and simple transfer of pressed articles without requiring movement of the picking arms in directions transverse to the plane.

According to some embodiments, the control unit is configured to control the first and the second drive units such that each of the first and second picking heads of the respective first and second picking arms move sequentially along the same path.

Thereby, the picking arms may be programmed in a similar manner such that their respective picking heads move along the same path. The path may comprise a first path section from the pick position to the release position and a second path section from the release position to the pick position, wherein the second path section is different from the first path section.

All parts of the first path section extending along the second axis may be spaced from the second path section. Hence, according to some embodiments, along the second axis no parts of the fist path section overlap with the second path section.

Thereby, collisions between the picking heads or other parts of the picking arms may be avoided at all times, even when the first picking arm moves from the pick position towards the release position while the second picking arm simultaneously moves from the release position to the pick position.

In relation to the first path section, the second path section along the second axis may be located at a greater axial distance (with respect to the first axis) above the tray.

Hence, according to such embodiments, each of the first and the second picking arms are configured to, when moving from the tray towards the press device, move in a direction parallel to the second axis at a first axial distance (along the first axis) from the tray, and, when moving from the press device towards the tray, move in a direction parallel to the second axis at a second axial distance (along the first axis) from the tray, wherein the first axial distance is greater than the second axial distance.

In other words, on their way along the second axis from the release position to the pick position, the picking arms move at a different (greater) height than when moving from the pick position to the release position.

Hence, the first path section and the second path section may correspond to, and is occasionally herein referred to as, a lower path and an upper path, respectively.

A benefit of moving a picking arm at a greater height on its way from the tray to the press device, instead of the other way around, is that it may then be easier to, on its way from the press device to the tray, temporarily release the picked-up component at different checkpoints or stations.

Hence, according to some embodiments, the path includes a plurality of pre-defined checkpoints comprising at least the pick position and the release position. Other checkpoints may be, for example, a scale for weighing the pressed article, a scrap station (where pressed articles not fulfilling requirements on weight, for example, can be disposed of), and a conveyor belt (for removing random samples for further verification, for example).

A checkpoint may also correspond to a predefined standby position where the picking arm is programmed to wait until some specific condition is fulfilled.

Not only the lower path but also the upper path may include checkpoints, in particular one or more standby positions, for example an upper standby position close to the press device, where the picking arm waits until the pick position is available and/or a pressed article is ready for being picked up at the pick position.

It may also be possible to position a picking arm at a "parking position" spaced from the path, such that, for example, one picking arm can be deactivated and parked without hindering the movement of the other picking arm.

The control unit may be configured to, before initiating a movement of the first or the second picking arm to a checkpoint along the path, receive an acknowledgement that the checkpoint is available.

Thereby, it is assured that the first picking arm will not move to a position (a checkpoint) that is already occupied by the second picking arm, or vice versa, and collisions are thus avoided.

As an alternative to using acknowledgements, the respective picking arms may be programmed to move sequentially along the path with a predefined timing offset, which for some applications may be sufficient for avoiding collisions.

According to a further aspect, the invention relates to a method for transferring a pressed article from a press device to a tray in a powder compaction machine by a transfer system comprising a first picking arm and a second picking arm, wherein the method comprises the steps of:
- picking up a first pressed article from the press device using a first picking head on the first picking arm,
- moving the first pressed article from the press device to the tray using the first picking arm,
- releasing the first pressed article onto the tray,
- picking up a second pressed article from the press device using a second picking head on the second picking arm,
- moving the second pressed article from the press device to the tray using the second picking arm,
- releasing the second pressed article onto the tray.

The steps are not necessarily carried out in the order as listed above. For example, the second picking arm may pick up the second pressed article from the press device before the first picking arm has released the first pressed article onto the tray.

The first and second picking arms are configured to move such that they don't collide with each other. According to some embodiments, the first and the second picking arms are configured to move such that the respective first and second picking heads move sequentially along the same path.

According to some embodiments, the method comprises a further step of, before moving the first and the second pressed article to the tray,
- receiving an acknowledgement that the tray is available.

As discussed previously, the path may include further checkpoints in addition to the release position at the tray and the pick position at the press device, and the method may involve the further step of receiving an acknowledgement that such checkpoint is available before moving to the checkpoint.

The method may involve further method steps, for example corresponding to the utilization of any of the features of the transfer system described above.

The invention also relates to a computer program, comprising computer readable code means to be executed by processing circuitry of the transfer system, which computer readable code means when executed causes the transfer system to perform a method according to any of the embodiments described herein. The invention also relates to a carrier containing such computer program, wherein the carrier is one of an electronic signal, optical signal, radio signal or computer readable storage medium.

According to a further aspect, the invention relates to a powder compaction machine comprising a transfer system according to any of the embodiments described herein. Such powder compaction machine may include, in addition to such transfer system, a press device and a tray, and any further hardware and software as required for supplying powder to the press device and carrying out a pressing process. The process for creating a pressed article may be controlled via a control system and by instructions executed by processing circuitry embodied therein or communicationally coupled thereto. Such control system and processing circuitry may correspond to, or comprise, the control unit and the processing circuitry of the transfer system, or the control system may be a separate control system. In the latter case, the control system is preferably communicationally coupled to the control unit of the transfer system and configured to transmit data thereto and/or receive data therefrom, such that the control of the picking arms can be synchronized with the pressing process.

### BRIEF DESCRIPTION OF DRAWINGS

The solution will now be described in more detail by means of exemplary embodiments and with reference to the accompanying drawings, in which:
Fig. 1 is a top view of a powder compaction machine including a transfer system according to an embodiment of the invention.
Fig. 2 is a side view of the powder compaction machine as seen from a direction II illustrated in Fig. 1.
Fig. 3 illustrates the picking arms of the transfer system shown in Figs. 1-2.
Fig. 4 illustrates a path that each picking arm will follow when transferring a pressed article.
Fig. 5 is a flowchart illustrating a method according to an embodiment of the invention.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

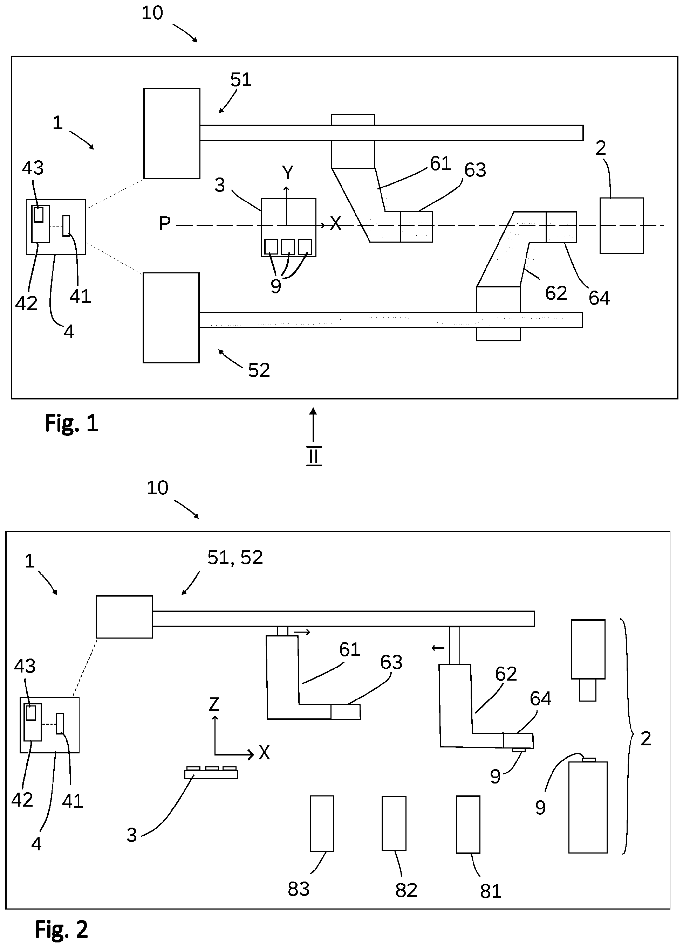

Figs. 1-2 schematically illustrate a powder compaction machine 1 including a transfer system 10 according to an embodiment of the invention.

In addition to the transfer system 1, the powder compaction machine 10 comprises a press device 2, wherein carbide cutting inserts 9 are pressed, and a tray 3 having a surface on which the pressed articles (i.e., the cutting inserts 9) are placed. In this embodiment, the tray 3 is a sintering tray meant to be placed in a sintering oven for sintering the cutting inserts 9.

A cartesian coordinate system is used to define the mutual orientation and directions between components of the transfer system and other components of the machine, wherein a vertical Z-axis (illustrated in Fig. 2), corresponding to the first axis, extends perpendicular to the surface of the tray 3, and the Y- and X-axes extend orthogonally to the Z-axis and to each other, wherein the X-axis, corresponding to the second axis, extends between the press device and the tray.

Fig. 1 shows the powder compaction machine 1 in a top view, i.e., as seen in a direction along the Z-axis towards the surface of the tray 3.

Fig. 2 shows the powder compaction machine 1 in a side view, i.e., as seen in a direction along the Y-axis, as indicated in Fig. 1.

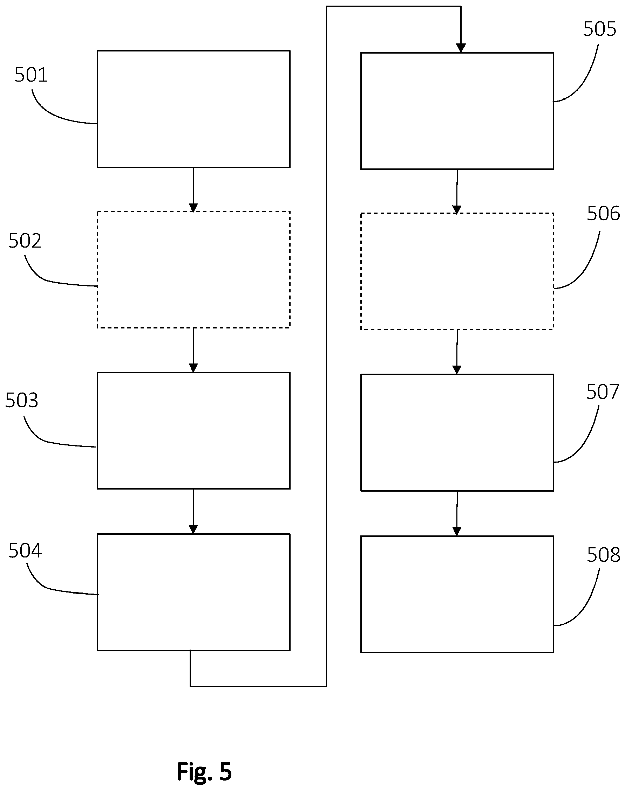

The transfer system 1 comprises a control unit 4 that comprises processing circuitry 41 and a memory 42 in which a computer program 43 is stored. The control unit 4 is communicationally coupled to a first drive unit 51 and a second drive unit 52 for control thereof. When the computer program 43 is executed by the processing circuitry 41, the control unit is configured to control the drive units 51, 52 to perform a method for transferring cutting inserts 9 from the press device 2 to the tray 3, as will be described in further detail below with reference to Fig. 5.

The transfer system 1 further comprises a first picking arm 61 and a second picking arm 62. The first picking arm 61 is movable via the first drive unit 51, and the second picking arm 62 is movable via the second drive unit 52.

The first and second drive units 51, 52 are arranged and configured such that they can move the first and the second picking arms 61, 62, respectively, in two orthogonal directions, one parallel to the X-axis and one parallel to the Z-axis. Each picking arm is configured to move along the Z-axis to pick up a cutting insert at a pick position located at the press device 2, and release the cutting insert at a release position at the tray 3. Each picking arm is further configured to move along the X-axis in order to transfer the cutting insert from a location above the pick position to a location above the release position.

The first picking arm 61 comprises a first picking head 63 and the second picking arm 62 comprises a second picking head 64. Each picking head is configured to pick up and hold a cutting insert 9.

As seen in Fig. 1, each picking arm 61, 62 partly extends in a transverse direction with respect to a plane P containing the Z- and the X-axes, and extends such that the picking head 63, 64 of each picking arm 61,62 is located in the plane P, while other parts of each picking arm, as well as the drive units, are located at a distance from the plane P.

To avoid collisions between the first and the second picking arms 61, 62, and in particular between the first and second picking heads 63, 64, the picking arms are located at a greater distance from the tray 3 along the Z-axis, i.e., at a greater height, when moving from the tray 3 towards the press device 2 than when moving from the press device 2 towards the tray 3. This is illustrated in Fig. 2 wherein the first picking arm 61 is travelling towards the press device 2 for picking up a cutting insert 9, and the second picking arm 62 is travelling towards the tray with a picked up cutting insert 9. As seen in the figure, the first picking arm 61 moving towards the press device is located at a greater height than the second picking arm 62 moving towards the tray. Thereby, no parts of the picking arms will collide even when the picking arms are located at the same position along the X-axis.

Fig. 2 further illustrates a number of additional checkpoints 81, 82, 83 that a cutting insert passes on its way to the tray 3. In this example, every cutting insert 9 is first released on a scale 81 where the cutting insert is weighed. Cutting inserts not fulfilling stipulated requirements are disposed of at a scrap station 82, whereas approved cutting inserts are moved to the tray 3 for release upon the surface thereof. However, not all cutting inserts are released on the tray. Instead, a small number of cutting inserts are left at another checkpoint 83 in the form of a sample conveyor belt, for removal of cutting inserts for further verification. The checkpoints 81, 82, 83 are just examples, and other or additional checkpoints may be used.

As best seen in Fig. 1, the cutting inserts released on the tray 3 are placed in rows. In figure 1, a first row of cutting inserts 9 have just been placed on the tray and the tray has been moved a predefined distance along the Y-axis such that a second row of cutting inserts, adjacent to the first row, can be placed on the tray.

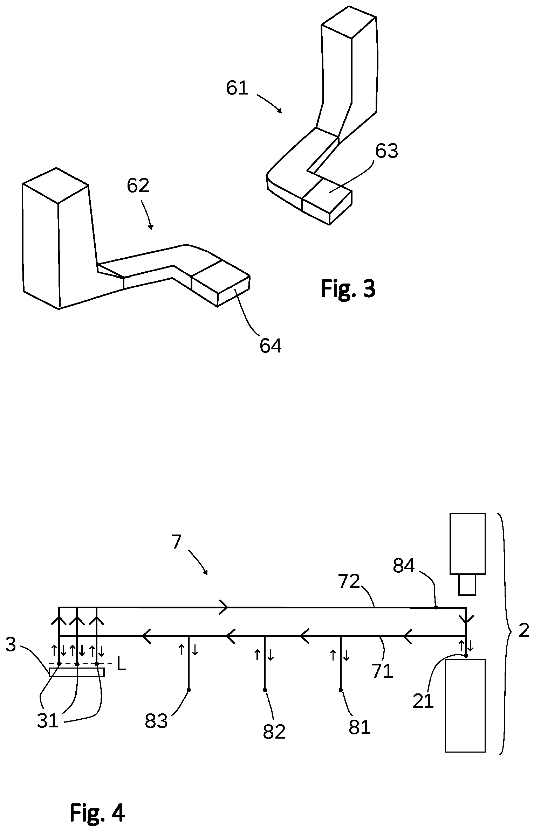

Fig. 3 illustrates the picking arms in more detail. The figure is only meant to further illustrate the geometrical extension of the picking arms and does not, for example, show any details of the gripping mechanisms of the picking heads 63, 64 or any details concerning the arrangements required for providing the motion of the picking arms via the drive units. Such mechanisms and arrangements may be embodied in various ways well-known to a person skilled in the art and are not described in more detail herein.

To avoid collisions without requiring movement also along the Y-axis, the picking arms should at least partly extend in a direction that is transverse, i.e., non-parallel, to the plane P, such that the two picking arms can extend from different sides of the plane P with their respective picking heads located in the plane P. However, it should be noted that the picking arms can be designed in various ways and the design shown in Fig. 3 is merely an example.

As already mentioned, each picking head moves at a different height on its way from the tray to the press device than on its way from the press device to the tray. Fig. 4 illustrates the path 7 along which each picking arm travels, wherein arrows indicate the direction of movement. Fig. 4 shows the powder compaction machine from a side view corresponding to the view in Fig. 2. For clarity, no parts of the transfer system 1 are shown in Fig. 4. The path 7 includes a first path section 71 (lower path) from the press device 2 to the tray 3 and a second path section 72 (upper path) from the tray 3 to the press device 2. Along the lower path 71, the picking arm stops at a plurality of checkpoints 81, 82, 83, as already mentioned.

In the process of controlling the picking arms, also the press device 2 and the tray 3 (and more specifically a pick position 21 and a release position 31 at which a cutting insert is picked up and released, respectively) may be considered as checkpoints. In this embodiment, before initiating a movement to a checkpoint, the control unit is arranged to receive an acknowledgement signal that the checkpoint is available, i.e., that the other picking arm has left the checkpoint. For some checkpoints, such acknowledgement may require further information that is related to the pressing process and that is received at the control unit, such that whether a pressed cutting insert is ready for pick up at the pick position, or whether the tray is in a correct position for release of a cutting insert at the release position.

In this exemplary embodiment, also the upper path 72 comprises a checkpoint, namely a standby position 84. Each picking arm is programmed to wait at the standby position 84, if required, until the press device is available (i.e., not occupied by the other picking arm) and a pressed cutting insert is ready to be picked up. When the control unit has received an acknowledgement that these requirements are fulfilled, the picking arm proceeds from the standby position 84 to the pick position 21 to pick up the cutting insert.

In the present embodiment, the pick position is always the same, i.e., both picking arms picks up a pressed article from the same position. In contrast, the release position varies, although always located along a release line L coinciding with a projection of the X-axis on the surface of the tray, such that no movement of the picking arm along the Y-axis is required. Hence, after each release of a cutting insert, the release position for the subsequent cutting insert is changed by a predetermined distance along the X-axis. Once a row on the tray has been filled with cutting inserts, the tray is moved a predetermined distance along the Y-axis such that a new row of cutting inserts can be placed on the tray. In the illustrated embodiment, the tray is arranged to carry a total of nine cutting inserts (three rows of three cutting inserts), meaning that three different release positions 31 along the release line L will be used.

With such solution, it is sufficient if the tray is moveable in just one direction (along the Y-axis) and the picking arms are moveable in two directions (along the X-axis and the Z-axis).

Fig. 5 is a flowchart illustrating a method according to an embodiment of the invention for transferring a pressed article from a press device to a tray in a powder compaction machine by a transfer system comprising a first picking arm and a second picking arm. Optional steps are illustrated by dashed lines. The method comprises the following steps:
In a first step 501, a first pressed article is picked up from the press device using a first picking head on the first picking arm.

In an optional second step 502, an acknowledgement is received that the tray is available.

In a third step 503, the first pressed article is moved to the tray using the first picking arm.

If acknowledgements are used to indicate that the tray is available, the movement of the first picking arm to the tray is not finalized until such acknowledgement has been received. However, a movement of the first picking arm from the press device may have been initiated even before such acknowledgement has been received, for example a movement to another checkpoint, such as a standby position, along the path towards the tray.

In a fourth step 504, the first pressed article is released onto the tray.

In a fifth step 505, a second pressed article is picked up from the press device using a second picking head on the second picking arm.

In an optional sixth step 506, a further acknowledgement is received that the tray is available.

In a seventh step 507, the second pressed article is moved to the tray using the second picking arm.

As for the first picking arm, if acknowledgements are used to indicate that the tray is available, the movement of the second picking arm to the tray is not finalized until such acknowledgement has been received. However, a movement of the second picking arm from the press device may have been initiated even before such acknowledgement has been received, for example a movement to another checkpoint, such as a standby position, along the path towards the tray.

In an eighth step 508, the second pressed article is released onto the tray.

The first and second picking arms are configured to move such that they don't collide with each other. This may be accomplished in different ways. In the embodiment illustrated in the figures, the first and the second picking arms are configured to move such that the respective first and second picking heads move sequentially along the same path, wherein the picking arms are configured to move at a greater height when moving from the tray towards the press device than when moving from the press device towards the tray.

In addition to the tray and the press device, the path may include further checkpoints, and the method may involve the further step of receiving an acknowledgement that such checkpoint is available before moving to the checkpoint.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A transfer system (1) for transferring pressed articles (9) from a press device (2) to a tray (3) in a powder compaction machine (10), wherein the transfer system (1) comprises:
- a first picking arm (61) that is moveable, via a first drive unit (51), in at least two transverse directions that are parallel, or substantially parallel, to respective first and second axes (Z, X), and wherein the first picking arm (61) includes a first picking head (63) at a front end thereof configured to pick up and release a pressed article (9); and
- a control unit (4) configured to control the first drive unit (51) to move the first picking arm (61) between a position in which the first picking head (63) is in a pick position (21) for picking up a pressed article (9) from the press device (2), and a position in which the first picking head (63) is in a release position (31) for releasing the pressed article (9) onto a surface of the tray (3),
**characterized in that** the transfer system (1) further comprises a second picking arm (62), independently movable in relation to the first picking arm (61), wherein the second picking arm (62) is movable, via a second drive unit (52), in at least two transverse directions that are parallel, or substantially parallel, to the respective first and second axes (Z, X), and wherein the second picking arm (62) includes a second picking head (64) at a front end thereof configured to pick up and release a pressed article (9),
wherein the control unit (4) is configured to control the second drive unit (52) to move the second picking arm (62) between a position in which the second picking head (64) is in a pick position (21) for picking up a pressed article (9) from the press device (2), and a position in which the second picking head (64) is in a release position (31) for releasing the pressed article (9) onto a surface of the tray (3).

2. The transfer system according to claim 1, wherein, during operation of the transfer system, the first and second picking arms are moveable only in the respective two transverse directions that are parallel, or substantially parallel, to the first and second axes.

3. The transfer system according to any of the previous claims, wherein the first axis (Z) is perpendicular to the surface of the tray.

4. The transfer system according to any of the previous claims, wherein the second axis (X) extends through, on one hand, a first line that is parallel to the first axis (Z) and that passes through the pick position, and, on the other hand, a second line that is parallel to the first axis (Z) and that passes through the release position.

5. The transfer system according to any of the previous claims, wherein the pick position for the first picking head is the same as the pick position for the second picking head.

6. The transfer system according to any of the previous claims, wherein each of the first and the second picking arms at least partly extends along a direction that is transverse to a plane (P) containing the first and the second axes (Z, X).

7. The transfer system according to any of the previous claims, wherein the first and the second picking arms are arranged such that, during movement of the respective picking arms, the first picking head and the second picking head are always located in a plane (P) containing the first and the second axes (Z, X).

8. The transfer system according to any of the previous claims, wherein the control unit is configured to control the first and the second drive units such that each of the first and second picking heads of the respective first and second picking arms move sequentially along the same path.

9. The transfer system according to claim 8, wherein the path (7) comprises a first path section (71) from the pick position to the release position and a second path section (72) from the release position to the pick position, wherein the second path section (72) is different from the first path section (71).

10. The transfer system according to claim 9, wherein, in relation to the first path section (71), the second path section (72) along the second axis (Z) is located at a greater axial distance, with respect to the first axis (Z), above the tray.

11. The transfer system according to any of the claims 8-10, wherein the path (7) includes a plurality of pre-defined checkpoints comprising at least the pick position (21) and the release position (31), and wherein the control unit is configured to, before initiating a movement of the first or the second picking arm to a checkpoint along the path, receive an acknowledgement that the checkpoint is available.

12. The transfer system according to any of the previous claims, further comprising processing circuitry (41) and a memory (42).

13. A method for transferring a pressed article from a press device to a tray in a powder compaction machine by a transfer system comprising a first picking arm and a second picking arm, wherein the method comprises the steps of:
- picking up (501) a first pressed article from the press device using a first picking head on the first picking arm,
- moving (503) the first pressed article from the press device to the tray using the first picking arm,
- releasing (504) the first pressed article onto the tray,
- picking up (505) a second pressed article from the press device using a second picking head on the second picking arm,
- moving (507) the second pressed article from the press device to the tray using the second picking arm,
- releasing (508) the second pressed article onto the tray.

14. The method according to claim 13, wherein the first and the second picking arms are configured to move such that the respective first and second picking heads move sequentially along the same path.

15. The method according to any of the claims 13 or 14, further comprising the step of, before moving the first and the second pressed article to the tray:
- receiving (502, 506) an acknowledgement that the tray is available.

16. A computer program (43), comprising computer readable code means to be executed by the processing circuitry (41) of the transfer system (1) according to claim 12, which computer readable code means when executed causes the transfer system to perform a method according to any of the claims 13-15.

17. A carrier containing the computer program according to claim 16, wherein the carrier is one of an electronic signal, optical signal, radio signal or computer readable storage medium.

18. A powder compaction machine (10) comprising the transfer system according to any of the claims 1-12.
